# NEUE EUROPÄISCHE PATENTSCHRIFT

(11) **EP 1 538 501 B2**
(45) Veröffentlichungstag und Bekanntmachung des Hinweises auf die Entscheidung über den Einspruch: **06.10.2010**
(45) Hinweis auf die Patenterteilung: 04.04.2007
(21) Anmeldenummer: 03026648.0
(22) Anmeldetag: 19.11.2003
(51) Int. Cl.: G05B 23/02, G05B 19/048, G05B 19/418

(54) **Verfahren zur Überwachung einer technischen Einrichtung**
Method for monitoring a technical installation
Procédé pour surveiller une installation technique

(43) Veröffentlichungstag der Anmeldung: 08.06.2005
(73) Patentinhaber: SIEMENS AKTIENGESELLSCHAFT, 80333 München (DE)
(72) Erfinder: Bode, Andreas, 91315 Höchstadt (DE)

(56) Entgegenhaltungen:
- EP-A- 0 895 197
- DE-A- 10 011 607
- DE-A- 10 208 251
- DE-A- 19 805 061
- DE-A- 19 903 826

## Beschreibung

Die Erfindung betrifft ein Verfahren zur Überwachung einer technischen Einrichtung gemäß dem Oberbegriff des Anspruchs 1.

Moderne technische Anlagen umfassen üblicherweise eine Vielzahl an technischen Einrichtungen, welche zusammenwirken um einen gewünschten Erfolg zu garantieren, beispielsweise die Produktion von Wirtschaftsgütern oder die Erzeugung und Bereitstellung von elektrischer Energie durch eine Kraftwerksanlage. Ein Ausfall oder auch ein nicht optimaler Betrieb einer technischen Einrichtung der Anlage führt im Ergebnis zumindest zu einer schlechten Qualität der erzeugten Güter oder bereitgestellten Dienstleistung, wenn nicht gar zum Ausfall der gesamten technischen Anlage.

Stillstandszeiten verursachen durch die eintretenden Produktionsausfälle hohe Folgekosten, und Qualitätsmängel schlagen sich in hohen Qualitätskosten nieder.

Deshalb ist es unbedingt erforderlich, Diagnosesysteme einzusetzen, mittels welcher die technischen Einrichtungen einer Anlage überwacht werden können.

Es sind Diagnosesysteme bekannt, bei welchen mittels Analysealgorithmen Referenzwerte während des Betriebs der technischen Einrichtung gewonnen werden, wobei die Überwachung zu einem Zeitpunkt beginnt, wenn die Erfassung der Referenzwerte weit fortgeschritten oder bereits abgeschlossen ist.

Nachteilig dabei ist, dass der Zeitpunkt vom Betriebsbeginn der technischen Einrichtung bis zum Abschluss des Lernvorgangs bezüglich der Erfassung der Referenzwerte die technische Einrichtung nicht überwacht wird und somit auftretende Fehler zum Ausfall der Einrichtung führen können.

Aus der DE 198 05 061 A1 ist beispielsweise ein Verfahren gemäß dem Oberbegriff des Anspruchs 1 zu entnehmen, bei dem aus während des Betriebs gemessenen Betriebsdaten Referenzwerte ermittelt und für einen Soll-Istwert-Vergleich mit den aktuellen Werten der Betriebsdaten herangezogen werden.

Andere bekannte Analyseverfahren verwenden Kriterien, die zwar grundsätzliche Anforderungen des Betriebs der Einrichtung erfüllen (beispielsweise eine Überwachung auf das Überschreiten einer maximal zulässigen Betriebstemperatur), jedoch können derartige Verfahren beispielsweise keine bei der Realisierung der technischen Einrichtung ausgenutzten Fertigungstoleranzen oder spezielle Eigenschaften der Einrichtung, welche sich erst während deren Betriebs ergeben, berücksichtigen oder kleine Abweichungen erkennen, die nicht zum Ausfall führen, aber den optimalen Betrieb gefährden.

Der Erfindung liegt daher die Aufgabe zugrunde, ein verbessertes Verfahren zur Überwachung einer technischen Einrichtung anzugeben, welches die genannten Nachteile überwindet und einfach zu realisieren ist.

Die Aufgabe wird erfindungsgemäß gelöst durch ein Verfahren zur Überwachung einer technischen Einrichtung mit folgenden Schritten:
1. Vorab wird mindestens ein Überwachungsgrenzwert für eine zu überwachende Betriebsgröße der technischen Einrichtung festgelegt, der von Anfang an, als erster aktueller Überwachungsreferenzwert zur Verfügung steht.
2. Während des Betriebs der technischen Einrichtung wird der aktuelle Wert der zu überwachenden Betriebsgröße zumindest innerhalb eines endlichen Zeitintervalls mindestens zweimal erfasst.
3. Innerhalb des Zeitintervalls wird ein aktueller Überwachungsreferenzwert mittels einer Interpolation zwischen dem Überwachungsgrenzwert und demaktuellen Wert der zu überwachenden Betriebsgröße ermittelt und
4. der aktuelle Überwachungsreferenzwert wird als Vergleichswert für die zu überwachende Betriebsgröße herangezogen.

Die Erfindung geht dabei von der Überlegung aus, dass eine Überwachung der technischen Einrichtung besonders zuverlässig ist, wenn sowohl grundsätzliche Randbedingungen, wie beispielsweise die vorher genannte maximale Betriebstemperatur, als Überwachungsgrenzwert, als auch spezifische, betriebsbezogene Informationen als eine oder mehrere zu überwachende Betriebsgrößen verarbeitet werden zu einem Überwachungsreferenzwert, mit welchem das tatsächliche Verhalten der zu überwachenden Betriebsgröße verglichen wird.

Das erfindungsgemäße Verfahren sieht demnach einen sich während des Betriebs der technischen Einrichtung verbessernden Überwachungsreferenzwert vor.

Zum Zeitpunkt des Betriebsbeginn der technischen Einrichtung überwiegt der Einfluss des Überwachungsgrenzwerts auf den aktuellen Überwachungsreferenzwert, wobei mit zunehmender Betriebsdauer der aktuelle Überwachungsreferenzwert immer stärker beeinflusst wird vom aktuellen Verhalten der zu überwachenden Betriebsgröße, so dass in der Folge während des Betriebs der Einrichtung auch kleinere Abweichungen der zu überwachenden Betriebsgröße vom Normalbetrieb detektiert werden können. So werden nicht nur solche Betriebszustände erkannt, die auf einen bevorstehenden Ausfall der Einrichtung schließen lassen, sondern auch solche, die sich aus ihrem Optimum wegbewegen, ohne zwingend einen Ausfall anzukündigen.

Beim erfindungsgemäßen Verfahren ist demnach ein Lernvorgang bezüglich der Ermittlung des Überwachungsreferenzwerts vorgesehen, wobei mit zunehmender Menge an Informationen aus dem Betrieb der technischen Einrichtung ein aktueller Überwachungsreferenzwert verbessert wird.

Ferner ist es möglich, dass die Überwachung der technischen Einrichtung sofort mit deren erstmaligem Betriebsbeginn beginnen kann, da von Anfang an zumindest der Überwachungsgrenzwert als erster aktueller Überwachungsreferenzwert zur Verfügung steht.

Im Unterschied dazu muss bei bekannten Analysealgorithmen zuerst ein Lernprozess abgewartet werden, bis ein Überwachungsreferenzwert zur Verfügung steht und die Überwachung beginnen kann.

In einer vorteilhaften Ausgestaltung wird der aktuelle Überwachungsreferenzwert mindestens zweimal ermittelt.

Dadurch verbessert sich die gewünschte Anpassung des aktuellen Überwachungsreferenzwerts an das tatsächliche Betriebsverhalten bezüglich der zu überwachenden Betriebsgröße, da ab der zweiten Ermittelung des aktuellen Überwachungsreferenzwerts der jeweils vorherige Überwachungsreferenzwert als Überwachungsgrenzwert verwendet wird.

So erhält man einen sich dynamisch in Form eines Lernprozesses verbessernden aktuellen Überwachungsreferenzwert.

In einer weiteren vorteilhaften Ausgestaltung fällt der Startzeitpunkt des Zeitintervalls mit dem Betriebsbeginn der technischen Einrichtung zusammen, so dass vom ersten in Betrieb gehen der technischen Einrichtung an eine Beurteilung der zu überwachenden Betriebsgröße möglich ist.

Vorteilhaft wird der aktuelle Wert der zu überwachenden Betriebsgröße innerhalb des Zeitintervalls laufend, bevorzugt in festen Zeitabständen, erfasst.

Auf diese Weise verbessert sich die Genauigkeit und Eignung des aktuellen Überwachungsreferenzwerts für Diagnosezwecke durch den kontinuierlichen Lernvorgang.

Bevorzugt wird auch der aktuelle Überwachungsreferenzwert innerhalb des Zeitintervalls laufend, bevorzug in festen Zeitabständen, ermittelt, wobei ab der zweiten Ermittlung der jeweils vorherige Überwachungsreferenzwert als Überwachungsgrenzwert verwendet wird.

Gemäß eines weiteren Ausführungsbeispiels wird der Endzeitpunkt des Zeitintervalls vorab festgelegt.

Bei dieser Ausführungsform macht man sich Erfahrungswerte zunutze, wonach nach einer gewissen Zeitdauer des Lernvorgangs der für die weitere Überwachung zugrundezulegende Überwachungsreferenzwert genügend genau vorliegt und nicht weiter verbessert werden muss. Es handelt sich dabei um einen Kompromiss zwischen schneller Einsatzfähigkeit des erfindungsgemäßen Verfahren und der Notwendigkeit eines länger andauernden Lernvorgangs bei der Ermittlung eines höchst genauen Überwachungsreferenzwerts. In sehr vielen praktisch vorkommenden Anwendungsfällen wird es möglich sein, den Endzeitpunkt des Zeitintervalls vorab festzulegen und damit einen definierten Endzeitpunkt des Lernvorgangs zu erhalten, ohne auf eine gewisse Genauigkeit des Überwachungsreferenzwertes verzichten zu müssen.

In einer anderen Ausführungsform wird der Endzeitpunkt des Zeitintervalls mittels der aktuellen Werte der zu überwachenden Betriebsgröße und des Überwachungsreferenzwerts ermittelt.

Bei diesem Ausführungsbeispiel hängt der absolute Endzeitpunkt davon ab, wie der aktuelle Überwachungsreferenzwert im Verhältnis steht zum aktuellen Wert der zu überwachenden Betriebsgröße. Beispielsweise kann - falls sich der aktuelle Überwachungsreferenzwert sehr nahe beim aktuellen Wert der zu überwachenden Betriebsgröße befindet - der Lernvorgang für beendet erklärt werden, obwohl noch eine gewisse Verbesserung des Überwachungsreferenzwerts zu erwarten wäre, die jedoch nicht als signifikant angesehen wird. Dadurch ist es möglich, dass bei bestimmten Einsatzfällen des erfindungsgemäßen Verfahrens der Lernvorgang sehr schnell abgeschlossen ist und die Überwachung ohne andauernde unterlagerte Lernprozesse durchgeführt werden kann.

Bevorzugt wird die Interpolation mittels einer mathematischen Funktion durchgeführt, welche besonders bevorzugt eine Interpolation aus der Gruppe {lineare Interpolation, quadratische Interpolation, kubische Interpolation, Interpolation mittels Spline-Funktionen} umfasst.

Diese bekannten Methoden der Interpolation sind in der mathematischen Fachliteratur erschöpfend dargestellt und für einen Fachmann im Zusammenhang mit dem erfindungsgemäßen Verfahren beherrschbar.

Weiterhin ist es vorteilhaft, wenn eine Verletzung des aktuellen Überwachungsreferenzwerts durch den aktuellen Wert der Betriebsgröße detektiert wird, wobei die Verletzung ein Über- oder Unterschreiten des aktuellen Überwachungsreferenzwerts umfassen kann.

Je nach Einsatzfall kann ein zu großer oder auch ein zu kleiner aktueller Wert der zu überwachenden Betriebsgröße eine Abweichung vom normalen Betrieb oder sogar eine Gefährdung bedeuten. Deshalb ist es wichtig, derartige Wertverletzungen festzustellen und entsprechende Warnmeldungen zu generieren oder sogar in den Betrieb der technischen Einrichtung einzugreifen.

Die Verletzung kann auch das Eintreten des aktuellen Werts der Betriebsgröße in ein Toleranzband um den aktuellen Überwachungsreferenzwert umfassen.

Hierbei wird nicht nur die scharfe Verletzung des aktuellen Überwachungsreferenzwerts ermittelt, sondern es wird auch ein Annähern des aktuellen Werts der Betriebsgröße an den aktuellen Überwachungsreferenzwert detektiert. So kann bereits im Vorfeld einer scharfen Verletzung der entsprechende Trend der zu überwachenden Betriebsgröße ausgewertet und Folgemaßnahmen, wie beispielsweise das Erzeugen von Warnmeldungen oder Eingriffe in den Betrieb der technischen Einrichtung, erzeugt werden.

In einer besonders bevorzugten Ausführungsform wird die Detektion auf Verletzung ab dem Betriebsbeginn der technischen Einrichtung durchgeführt. Unter Betriebsbeginn ist dabei insbesondere das erste in Betrieb gehen der technischen Einrichtung umfasst, bei welchem noch keine Informationen über das Verhalten der zu überwachenden Betriebsgröße während des Betriebs vorliegen.

Eine Überwachung ist dennoch gemäß dem erfindungsgemäßen Verfahren möglich, da zum genannten Startzeitpunkt des Betriebs zumindest der vorab festgelegte Überwachungsgrenzwert als aktueller Überwachungsreferenzwert verwendet wird, welcher sich mit zunehmender Betriebsdauer bessert. So ist die Überwachung hinsichtlich ihrer Qualität zum Startzeitpunkt des ersten in Betriebgehens zwar noch nicht optimal, aber wenigstens bereits verfügbar, so dass zumindest gröbere Verletzungen, wie beispielsweise das Überschreiten des Überwachungsgrenzwerts durch den aktuellen Wert der zu überwachenden Betriebsgröße, detektiert werden können.

In einer weiteren vorteilhaften Ausgestaltung wird der aktuelle Überwachungsreferenzwert ab dem Ende des Zeitintervalls nicht mehr verändert.

Mit dem Ende des Zeitintervalls wird der Lernvorgang dabei als abgeschlossen betrachtet und es werden keine weiteren Ressourcen zur Ermittlung des Überwachungsreferenzwerts benötigt. Wie bereits erwähnt, kann der Endzeitpunkt des Zeitintervalls dabei vorab festgelegt werden oder sich aus den aktuellen Werten der zu überwachenden Betriebsgröße und des Überwachungsreferenzwerts dynamisch ergeben.

Im Folgenden wird ein Ausführungsbeispiel der Erfindung näher dargestellt.

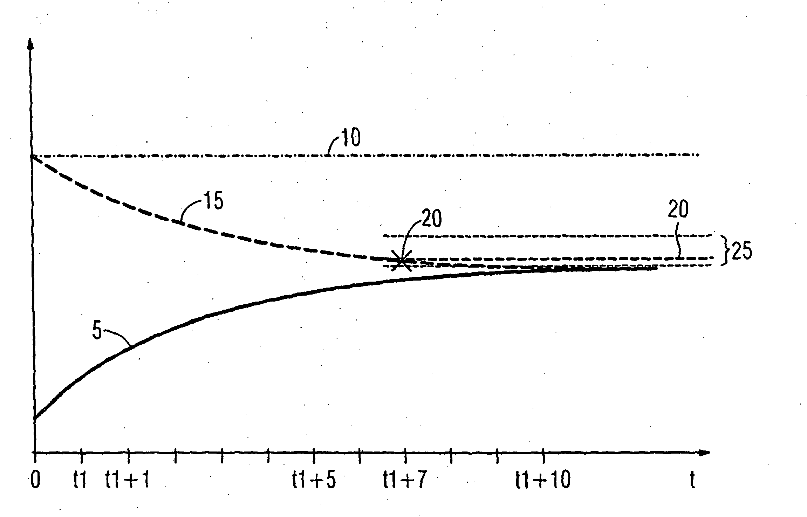

Es zeigt:
FIG ein beispielhaftes Verhalten des Überwachungsreferenzwerts sowie der zu überwachenden Betriebsgröße während des Betriebs einer technischen Einrichtung zur Erläuterung des erfindungsgemäßen Verfahrens.
In der Figur ist das zeitliche Verhalten einer zu überwachenden Betriebsgröße 5 dargestellt. Bei dieser Größe kann es sich beispielsweise um eine gemessene Lagertemperatur handeln, welche sich mit zunehmender Betriebszeit erhöht und asymptotisch einen bestimmten Wert entsprechend dem normalen Dauerbetrieb annähert.
Ein Überwachungsgrenzwert 10 kann beispielsweise in einer Grenztemperatur bestehen, welche nicht überschritten werden darf, um das Lager nicht zu zerstören. Dieser Überwachungsgrenzwert 10 ist dabei von der Art und dem Material des Lagers abhängig und ist üblicherweise sehr viel höher als die tatsächlich im normalen Dauerbetrieb des Lagers erreichte Temperatur.

Dennoch kann es Sinn machen, die zu überwachende Betriebsgrö-ße 5 zumindest auf ein Überschreiten des Überwachungsgrenzwerts 10 zu überprüfen, da beispielsweise ein defektes Lager sehr schnell derartig hohe Lagertemperaturen aufweisen kann. Vom Zeitpunkt 0 des ersten in Betriebgehens an wird der aktuelle Wert der zu überwachenden Betriebsgröße 5 zu den Zeitpunkten t1, t1+1, t1+2,... gemessen. Ein aktueller Überwachungsreferenzwert 15 wird mit Hilfe des Überwachungsgrenzwerts 10 und des aktuellen Werts der zu überwachenden Betriebsgröße 5 ermittelt.

Der jeweils aktuelle Wert des Überwachungsreferenzwerts 15 wird verwendet, um den aktuellen Wert der zu überwachenden Betriebsgröße 5 zu beurteilen. Insbesondere wird dabei detektiert, ob der aktuelle Wert der Betriebsgröße 5 den zu einem bestimmten Zeitpunkt aktuell vorliegenden Wert des Überwachungsreferenzwerts 15 über- oder unterschreitet. Da der Überwachungsreferenzwert 15 vom tatsächlichen Verhalten der Betriebsgröße 5 beeinflusst wird, ist dieser Überwachungsreferenzwert 15 für eine Überwachung einer technischen Einrichtung besser geeignet als der Überwachungsgrenzwert 10, dessen Verletzung in den meisten Fällen bereits eine Gefährdung oder Beschädigung bedeutet.

Im Unterschied dazu behält man durch einen Vergleich des aktuellen Werts der Betriebsgröße 5 mit dem aktuellen Wert des Überwachungsreferenzwerts 15 auch Informationen darüber, wie weit der aktuelle Wert der Betriebsgröße 5 von einem gewünschten Normalbetrieb entfernt ist, ohne dass dies bereits eine Gefährdung oder die Möglichkeit einer Beschädigung der technischen Einrichtung beinhalten muss.

Ab dem Zeitpunkt t1+7 wird der zu diesem Zeitpunkt vorliegende aktuelle Wert des Überwachungsreferenzwerts 15 als Überwachungswert 20 für die weitere Überwachung der technischen Einrichtung zugrunde gelegt, so dass beispielsweise auch zum Zeitpunkt t1+10 der aktuelle Wert der Betriebsgröße 5 mit dem zum Zeitpunkt t1+7 bereits vorliegenden Wert des Überwachungsreferenzwerts 15, dem Überwachungswert 20, verglichen wird.

Dieser Vergleich kann beispielsweise auch eine Überprüfung dahingehend beinhalten, ob der aktuelle Wert der Betriebsgrö-ße 5 in ein Toleranzband 25 um den Überwachungswert 20 eingetreten ist.

Dieses Toleranzband 25 kann beispielsweise den Betriebsbereich repräsentieren, innerhalb welchem ein aktueller Wert der Betriebsgröße 5 keinen optimalen Betrieb der technischen Einrichtung mehr gewährleistet.

Zur Ermittlung des Überwachungsreferenzwerts 15 aus dem Überwachungsgrenzwert 10 und dem aktuellen Wert der Betriebsgröße 5 wird ein Interpolationsverfahren herangezogen, beispielsweise eine lineare Interpolation zwischen den genannten Grö-ßen; es können dafür aber auch beliebige andere mathematische Funktionen in Frage.

Zusammengefasst lässt sich das erfindungsgemäße Verfahren wie folgt darstellen:
Ausgehend von einem vorab festgelegten Überwachungsgrenzwert 10, welcher beispielsweise eine Beschädigungsgrenze repräsentiert, wird anhand des tatsächlichen Verhaltens einer zu überwachenden Betriebsgröße ein Überwachungsreferenzwert 15 in einem Lernvorgang ermittelt, welcher anstelle des Überwachungsgrenzwerts 10 der weiteren Überwachung der Betriebsgrö-ße 5 zugrunde gelegt wird.

## Patentansprüche

1. Verfahren zur Überwachung einer technischen Einrichtung, bei dem während des Betriebs der technischen Einrichtung ein aktueller Wert einer zu überwachenden Betriebsgröße (5) zumindest innerhalb eines endlichen Zeitintervalls mindestens zwei Mal erfasst wird, **dadurch gekennzeichnet, dass** vorab mindestens ein Überwachungsgrenzwert (10) für die zu überwachende Betriebsgröße (5) der technischen Einrichtung festgelegt wird, der von Anfang an als erster aktueller Überwachungsreferenzwert zur Verfügung steht und dass innerhalb des Zeitintervalls ein aktueller Überwachungsreferenzwert (15) mittels einer Interpolation zwischen dem Überwachungsgrenzwert (10) und dem aktuellen Wert der zu überwachenden Betriebsgröße (5) ermittelt und als Vergleichswert für die zu überwachende Betriebsgröße (5) herangezogen wird.

2. Verfahren nach Anspruch 1,
**dadurch gekennzeichnet, dass** der aktuelle Überwachungsreferenzwert (15) mindestens zwei Mal ermittelt wird, wobei ab der zweiten Ermittlung der jeweils vorherige Überwachungsreferenzwert (15) als Überwachungsgrenzwert (10) verwendet wird.

3. Verfahren nach einem der Ansprüche 1 oder 2,
**dadurch gekennzeichnet, dass** der Startzeitpunkt des Zeitintervalls mit dem Betriebsbeginn der technischen Einrichtung zusammen fällt.

4. Verfahren nach einem der Ansprüche 1 bis 3,
**dadurch gekennzeichnet, dass** der aktuelle Wert der zu überwachenden Betriebsgröße (5) innerhalb des Zeitintervalls laufend, bevorzugt in festen Zeitabständen, erfasst wird.

5. Verfahren nach einem der Ansprüche 1 bis 4,
**dadurch gekennzeichnet, dass** der aktuelle Überwachungsreferenzwert (15) innerhalb des Zeitintervalls laufend, bevorzugt in festen Zeitabständen, ermittelt wird, wobei ab der zweiten Ermittlung der jeweils vorherige Überwachungsreferenzwert (15) als Überwachungsgrenzwert (10) verwendet wird.

6. Verfahren nach einem der Ansprüche 1 bis 5,
**dadurch gekennzeichnet, dass** der Endzeitpunkt des Zeitintervalls vorab festgelegt wird.

7. Verfahren nach einem der Ansprüche 1 bis 5,
**dadurch gekennzeichnet, dass** der Endzeitpunkt des Zeitintervalls mittels der aktuellen Werte der zu überwachenden Betriebsgröße (5) und des Überwachungsreferenzwertes (15) ermittelt wird.

8. Verfahren nach einem der Ansprüche 1 bis 7,
**dadurch gekennzeichnet, dass** die Interpolation mittels einer mathematischen Funktion durchgeführt wird.

9. Verfahren nach Anspruch 8,
**dadurch gekennzeichnet, dass** die Interpolation eine Interpolation aus der Gruppe {lineare Interpolation, quadratische Interpolation, kubische Interpolation, Interpolation mittels Spline-Funktionen} umfasst.

10. Verfahren nach einem der Ansprüche 1 bis 9,
**dadurch gekennzeichnet, dass** eine Verletzung des aktuellen Überwachungsreferenzwertes (15) durch den aktuellen Wert der Betriebsgröße (5) detektiert wird.

11. Verfahren nach Anspruch 10,
**dadurch gekennzeichnet, dass** die Verletzung ein Über- oder Unterschreiten des aktuellen Überwachungsreferenzwertes (15) umfasst.

12. Verfahren nach Anspruch 10,
**dadurch gekennzeichnet, dass** die Verletzung das Eintreten des aktuellen Werts der Betriebsgröße (5) in ein Toleranzband (25) um den aktuellen Überwachungsreferenzwert (15) umfasst.

13. Verfahren nach Anspruch 3 in Verbindung mit Anspruch 10,
**dadurch gekennzeichnet, dass** die Detektion auf Verletzung ab dem Betriebsbeginn der technischen Einrichtung durchgeführt wird.

14. Verfahren nach einem der Ansprüche 1 bis 13,
**dadurch gekennzeichnet, dass** der aktuelle Überwachungsreferenzwert (15) ab dem Ende des Zeitintervalls nicht mehr verändert wird.

## Claims

1. Method for monitoring a technical device, wherein during the operation of the technical device a current value of an operating variable (5) to be monitored is recorded at least twice at least within a finite time period, **characterised in that** at least one monitoring limit value (10) for the operating variable (5) to be monitored of the technical device is specified in advance, which monitoring limit value (10) is available from the outset as a first current monitoring reference value, and **in that** within the time period a current monitoring reference value (15) is determined by means of an interpolation between the monitoring limit value (10) and the current value of the operating variable (5) to be monitored and is used as a comparative value for the operating variable (5) to be monitored.

2. Method according to claim 1,
**characterised in that** the current monitoring reference value (15) is determined at least twice, wherein starting from the second time of its being determined the previous monitoring reference value (15) in each case is used as the monitoring limit value (10).

3. Method according to one of claims 1 or 2,
**characterised in that** the start time of the time period coincides with the start of operation of the technical device.

4. Method according to one of claims 1 to 3,
**characterised in that** the current value of the operating variable (5) to be monitored is recorded continually within the time period, preferably at fixed intervals.

5. Method according to one of claims 1 to 4,
**characterised in that** the current monitoring reference value (15) is determined continually within the time period, preferably at fixed intervals, wherein starting from the second time of its being determined, the previous monitoring reference value (15) in each case is used as the monitoring limit value (10).

6. Method according to one of claims 1 to 5,
**characterised in that** the end time of the time period is specified in advance.

7. Method according to one of claims 1 to 5,
**characterised in that** the end time of the time period is determined by means of the current values of the operating variable (5) to be monitored and the monitoring reference value (15).

8. Method according to one of claims 1 to 7,
**characterised in that** the interpolation is performed by means of a mathematical function.

9. Method according to claim 8,
**characterised in that** the interpolation comprises an interpolation from the group {linear interpolation, quadratic interpolation, cubic interpolation, interpolation by means of spline functions}.

10. Method according to one of claims 1 to 9,
**characterised in that** a violation of the current monitoring reference value (15) by the current value of the operating variable (5) is detected.

11. Method according to claim 10,
**characterised in that** the violation comprises an overshooting or undershooting of the current monitoring reference value (15).

12. Method according to claim 10,
**characterised in that** the violation comprises the current value of the operating variable (5) entering into a tolerance band (25) around the current monitoring reference value (15).

13. Method according to claim 3 in combination with claim 10,
**characterised in that** the detection for violation is performed from the start of operation of the technical device.

14. Method according to one of claims 1 to 13,
**characterised in that** the current monitoring reference value (15) is no longer changed from the end of the time period.

## Revendications

1. Procédé de contrôle d'un dispositif technique dans lequel on relève pendant le fonctionnement du dispositif technique une valeur instantanée d'une grandeur ( 5 ) de fonctionnement à contrôler au moins deux fois en un intervalle de temps fini, **caractérisé en ce qu'**on fixe auparavant au moins une valeur ( 10 ) limite de contrôle de la grandeur ( 5 ) de fonctionnement à contrôler du dispositif technique, qui est dès le début à disposition comme première valeur de référence de contrôle instantanée et **en ce que**, dans l'intervalle de temps, on détermine une valeur ( 15 ) de référence de contrôle instantanée au moyen d'une interpolation entre la valeur ( 10 ) limite de contrôle et la valeur instantanée de la grandeur ( 5 ) de fonctionnement à contrôler et on l'utilise comme valeur de comparaison pour la grandeur ( 5 ) de fonctionnement à contrôler.

2. Procédé suivant la revendication 1, **caractérisé en ce que** l'on détermine au moins deux fois la valeur ( 15 ) de référence de contrôle instantanée en utilisant à partir de la deuxième détermination la valeur ( 15 ) de référence de contrôle précédente, respectivement, comme valeur ( 10 ) limite de contrôle.

3. Procédé suivant l'une des revendications 1 ou 2, **caractérisé en ce que** l'instant de début de l'intervalle de temps coïncide avec le début du fonctionnement du dispositif technique.

4. Procédé suivant l'une des revendications 1 à 3, **caractérisé en ce que** l'on relève la valeur instantanée de la grandeur ( 5 ) de fonctionnement à contrôler en continu dans l'intervalle de temps, de préférence à des laps de temps fixes.

5. Procédé suivant l'une des revendications 1 à 4, **caractérisé en ce que** l'on détermine en continu la valeur ( 15 ) de référence de contrôle instantanée dans l'intervalle de temps, de préférence à des laps de temps fixes en utilisant à partir de la deuxième détermination la valeur ( 15 ) de référence de contrôle précédente respective comme valeur ( 10 ) limite de contrôle.

6. Procédé suivant l'une des revendications 1 à 5, **caractérisé en ce que** l'on fixe à l'avance l'instant de fin de l'intervalle de temps.

7. Procédé suivant l'une des revendications 1 à 5, **caractérisé en ce que** l'on détermine l'instant de fin de l'intervalle de temps au moyen des valeurs instantanée de la grandeur ( 5 ) de fonctionnement à contrôler et de la valeur ( 15 ) de référence de contrôle.

8. Procédé suivant l'une des revendications 1 à 7, **caractérisé en ce que** l'on effectue l'interpolation au moyen d'une fonction mathématique.

9. Procédé suivant la revendication 8, **caractérisé en ce que** l'interpolation comprend une interpolation dans le groupe ( interpolation linéaire, interpolation quadratique, interpolation cubique, interpolation au moyen de fonctions Spline ).

10. Procédé suivant l'une des revendications 1 à 9, **caractérisé en ce que** l'on détecte une violation de la valeur ( 15 ) de référence de contrôle instantanée par la valeur instantanée de la grandeur ( 5 ) de fonctionnement.

11. Procédé suivant la revendication 10, **caractérisé en ce que** la violation consiste **en ce que** l'on passe au-dessus ou en ce que l'on passe en dessous de la valeur ( 15 ) de référence de contrôle instantanée.

12. Procédé suivant la revendication 10, **caractérisé en ce que** la violation comprend l'entrée de la valeur instantanée de la grandeur ( 5 ) de fonctionnement dans une plage ( 25 ) de tolérance autour de la valeur ( 15 ) de référence de contrôle instantanée.

13. Procédé suivant la revendication 3 en liaison avec la revendication 10, **caractérisé en ce que** l'on effectue la détection de la violation à partir du début du fonctionnement du dispositif technique.

14. Procédé suivant l'une des revendications 1 à 13, **caractérisé en ce que** l'on ne modifie plus la valeur ( 15 ) de référence de contrôle instantanée à partir de la fin de l'intervalle de temps.
